# FASCICULE DE BREVET EUROPEEN

(11) **EP 1 263 104 B1**
(45) Date de publication et mention de la délivrance du brevet: **14.01.2015**
(21) Numéro de dépôt: 02291233.1
(22) Date de dépôt: 17.05.2002
(51) Int. Cl.: H02G 3/06

(54) **Accessoire d'angle pour goulotte**
Winkelzubehörelement für Führungskanal
Angle accessory for duct

(30) Priorité: 01.06.2001 FR 0107253
(43) Date de publication de la demande: 04.12.2002
(73) Titulaire: Legrand France, 87000 Limoges (FR); Legrand SNC, 87000 Limoges (FR)
(72) Inventeur: Jadaud, Alain, 72240 Tennie (FR); Decore, Bertrand, 72650 La Chapelle Saint Aubin (FR)
(74) Mandataire: Santarelli

(56) Documents cités:
- EP-A- 0 734 107
- FR-A- 2 727 578
- GB-A- 685 964

## Description

La présente invention concerne de manière générale les goulottes du type de celles mises en oeuvre, par exemple, pour le support, le logement et la protection de divers appareillages, et en particulier de divers appareillages électriques, aussi bien que pour le support, le logement, et la protection des conducteurs ou des canalisations nécessaires à la desserte de ces appareillages.

Elle concerne plus particulièrement une goulotte comportant un accessoire d'angle pour goulotte destiné à établir une continuité entre deux tronçons de goulotte d'orientations différentes comportant chacun un socle pourvu de deux ailes latérales dont les retours, dirigés l'un vers l'autre, comportent des moyens de montage d'un tronçon de couvercle, ledit accessoire d'angle comprenant deux joues destinées chacune à établir une continuité de paroi entre deux ailes latérales desdits socles, chaque joue portant un bandeau assurant une continuité de paroi entre les retours desdites ailes latérales desdits socles.

Cet accessoire d'angle est généralement utilisé pour établir la liaison entre deux tronçons de goulotte coupés à l'onglet et posés bout à bout pour former un angle intérieur ou un angle extérieur.

Un tel accessoire d'angle est déjà connu du document EP 0 734 107.

Selon ce document, les bandeaux des joues de l'accessoire d'angle présentent des moyens de montage d'un élément de couvercle spécifique destiné à fermer l'accessoire d'angle en venant recouvrir les extrémités coupées des tronçons de couvercle encliquetés sur les socles des tronçons de goulotte à raccorder.

Un tel accessoire d'angle forme également sur les socles une saillie du fait que son élément de couvercle doit recouvrir les extrémités coupées des tronçons de couvercle encliquetés sur les socles.

On connaît également du document DE 41 20 937 un accessoire d'angle du même type de celui décrit dans le document EP 0 734 107 qui comporte deux joues destinées à établir une continuité entre les ailes latérales des socles des tronçons de goulotte à raccorder et un élément de couvercle spécifique à fixer sur les deux joues pour fermer l'angle formé entre lesdits socles.

Selon ce document, chaque bord d'extrémité de l'élément de couvercle spécifique vient s'appliquer contre un bord d'extrémité coupé d'un tronçon de couvercle de fermeture de chaque socle en formant une arête à la jonction des deux bords d'extrémité.

On connaît également du document GB 2 315 924 un accessoire d'angle comportant, d'une part, une partie d'extrémité établissant la continuité entre les ailes latérales des socles des tronçons de goulotte à raccorder et comportant, d'une seule pièce, un élément de fermeture de l'angle formé entre lesdits socles recouvrant les bords coupés des tronçons de couvercle de fermeture desdits socles d'extrémité, et, d'autre part, un élément de jonction entre des cloisons internes des socles ainsi qu'un élément de fermeture spécifique à encliqueter sur l'élément de jonction et recouvrant les bords d'extrémité coupés des tronçons de couvercle de fermeture desdits socles.

Enfin, on connaît du document GB 1 050 742 un accessoire d'angle pour goulotte destiné à établir une continuité entre deux tronçons de goulotte d'orientations différentes coupés à l'équerre, et comportant une platine ainsi que deux joues destinées à établir chacune une continuité de paroi entre les deux ailes latérales desdits socles, les joues portant un bandeau assurant une continuité de paroi entre les retours en équerre des ailes latérales desdits socles.

Ici, les couvercles de fermeture des socles des tronçons de goulotte ne sont pas fixés par encliquetage, et les bandeaux des joues de l'accessoire d'angle forment un angle aigu de sorte que l'angle, formé entre les deux socles, est fermé par deux tronçons de couvercle de fermeture qui forment, à leur jonction, une arête ou une pliure.

Afin de résoudre les inconvénients précités, la présente invention propose une goulotte comportant deux tronçons de goulotte d'orientations différentes comportant chacun un socle pourvu de deux ailes latérales dont des retours, dirigés l'un vers l'autre, comportent des moyens de montage d'un tronçon de couvercle, comportant :
- un accessoire d'angle destiné à établir une continuité entre les deux tronçons de goulotte ; ledit accessoire d'angle comprenant deux joues établissant chacune une continuité de paroi entre deux ailes latérales desdits socles , chaque joue portant un bandeau assurant une continuité de paroi entre les retours desdites ailes latérales desdits socles, le bandeau de chaque joue comportant des moyens de montage du tronçon de couvercle (40 ; 40') qui s'étendent selon un arc de cercle d'un rayon de courbure donné ; et
- un tronçon de couvercle (40,40'), monté sur lesdites joues et lesdits socles, fermant une partie desdits socles (10,10') et l'angle formé entre lesdits socles (10 ; 10') sans interruption ni arête ou pliure dans ledit angle.

D'autres caractéristiques non limitatives et avantageuses de la goulotte conforme à l'invention sont les suivantes :
- elle comporte une autre joue destinée à établir une continuité de paroi entre deux cloisons de fractionnement rapportées sur les fonds desdits socles, cette autre joue portant un bandeau assurant une continuité de paroi entre des retours desdites cloisons de fractionnement dans lesquels sont montés des tronçons de couvercle de fermeture des compartiments desdits socles, ledit bandeau comprenant des moyens de montage desdits tronçons de couvercle s'étendant selon un rayon de courbure donné, les tronçons de couvercle de fermeture des compartiments desdits socles, montés sur lesdites joues, fermant chacun une partie d'un couple de compartiments aboutés desdits socles et l'angle formé entre lesdits socles sans interruption ni arête ou pliure dans ledit angle ;
- lesdits moyens de montage de chaque tronçon de couvercle prévus sur lesdits bandeaux desdites joues sont sensiblement identiques aux moyens de montage d'un tronçon de couvercle prévus sur lesdits retours desdites ailes latérales ou des cloisons de fractionnement desdits socles ;
- lesdits moyens de montage de chaque tronçon de couvercle prévus sur lesdits bandeaux desdites joues comprennent des moyens d'engagement dudit tronçon de couvercle. Ces moyens d'engagement comprennent, par exemple, pour chaque joue, une rainure qui assure une continuité de rainure entre les rainures prévues sur les retours des ailes latérales ou des cloisons de fractionnement desdits socles ;
- lesdits moyens de montage de chaque tronçon de couvercle prévus sur lesdits bandeaux desdites joues comprennent des moyens d'encliquetage dudit tronçon de goulotte. Ces moyens d'encliquetage comprennent, par exemple, pour chaque joue, un bourrelet d'encliquetage qui assure une continuité de bourrelet d'encliquetage entre les bourrelets d'encliquetage prévus sur les retours des ailes latérales ou des cloisons de fractionnement desdits socles ;
- ledit rayon de courbure est compris entre environ 35 et 80 mm ou entre environ 35 et 40 mm ;
- chaque joue comporte au moins deux éléments, à savoir un élément de base comportant une partie d'extrémité engagée sur une aile latérale ou sur une cloison de fractionnement d'un desdits socles de façon à couvrir le bord coupé de cette dernière, et un élément d'extrémité engagé sur une aile latérale ou sur une cloison de fractionnement de l'autre desdits socles de façon à couvrir le bord coupé de cette dernière, ledit élément d'extrémité et ledit élément de base étant montés à pivotement l'un sur l'autre de sorte qu'ils sont aptes à être positionnés selon différentes positions angulaires relatives ;
- il est prévu sur l'élément de base, d'une part, et sur l'élément d'extrémité, d'autre part, des moyens de blocage débrayables coopérant entre eux pour bloquer en position angulaire, de manière débrayable, l'élément d'extrémité et l'élément de base l'un par rapport à l'autre ;
l'élément de base comprend, à l'opposé de sa partie d'extrémité, au moins une partie sécable ;
- chaque joue comprend au moins un élément supplémentaire à rapporter de manière fixe sur l'élément de base à l'opposé de sa partie d'extrémité de manière à former un élément unique sur lequel est monté à pivotement ledit élément d'extrémité. Chaque élément supplémentaire peut être rapporté par emboîtement sur l'élément de base et peut être fixé par accrochage sur ledit élément de base ; et
- chaque élément supplémentaire comprend au moins une partie sécable s'étendant sur un secteur angulaire.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'un mode de réalisation de l'accessoire d'angle selon l'invention rapporté sur deux socles de tronçons de goulotte ;
- la figure 2 est une vue partielle de dessous d'un tronçon de couvercle de fermeture des socles représentés sur la figure 1 ;
- la figure 3A est une vue de dessus de l'élément de base d'une joue de l'accessoire d'angle représenté sur la figure 1 ;
- la figure 3B est une vue de dessous de l'élément de base représenté sur la figure 3A ;
- la figure 4A est une vue de dessus de l'élément d'extrémité d'une joue de l'accessoire d'angle représenté sur la figure 1 ;
- la figure 4B est une vue de dessous de l'élément d'extrémité représenté sur la figure 4A ;
- la figure 5A est une vue en perspective de dessus d'une joue de l'accessoire d'angle représenté sur la figure 1 ;
- la figure 5B est une vue de dessous de la joue représentée sur la figure 5A ;
- la figure 6A est une vue en perspective d'un élément supplémentaire à rapporter sur l'élément de base d'une joue de l'accessoire d'angle représenté sur la figure 1 ;
- la figure 6B est une vue de dessous de l'élément supplémentaire représenté sur la figure 6A ;
- la figure 7A est une vue en perspective de l'élément de base assemblé avec l'élément supplémentaire d'une joue de l'accessoire d'angle selon l'invention ;
- la figure 7B est une vue de dessous de l'assemblage représenté sur la figure 7A ;
- la figure 8A est une variante de réalisation d'une joue de l'accessoire d'angle selon l'invention comprenant trois éléments, à savoir l'élément de base, l'élément supplémentaire et l'élément d'extrémité ;
- la figure 8B est une vue de dessous de la joue représentée sur la figure 8A ;
- les figures 9 et 10 représentent deux étapes successives de mise en place d'une joue de l'accessoire d'angle représenté sur la figure 1 sur les ailes latérales des socles des tronçons de goulotte aboutés ;
- la figure 11 est une vue en perspective des socles représentés sur la figure 1 reliés par l'accessoire d'angle selon l'invention et fermés par un même de tronçon de couvercle ;
- la figure 12 représente deux socles de tronçons de goulotte positionnés l'un par rapport à l'autre pour former un angle extérieur d'environ 120 degrés et comprenant l'accessoire d'angle selon l'invention, le tout étant fermé par un même tronçon de couvercle de fermeture ;
- la figure 13 représente une variante de l'accessoire d'angle selon l'invention comprenant une autre joue permettant d'établir la continuité de paroi entre des cloisons de fractionnement rapportées sur les fonds des tronçons de goulotte aboutés ;
- la figure 14 représente deux socles de tronçons de goulotte aboutés pour former un angle extérieur d'environ 60 degrés et comprenant une variante de réalisation de l'accessoire d'angle selon l'invention ; et
- la figure 15 représente une autre variante de l'accessoire d'angle selon l'invention permettant de relier entre eux deux socles de tronçons de goulotte positionnés pour former un angle intérieur d'environ 90 degrés.

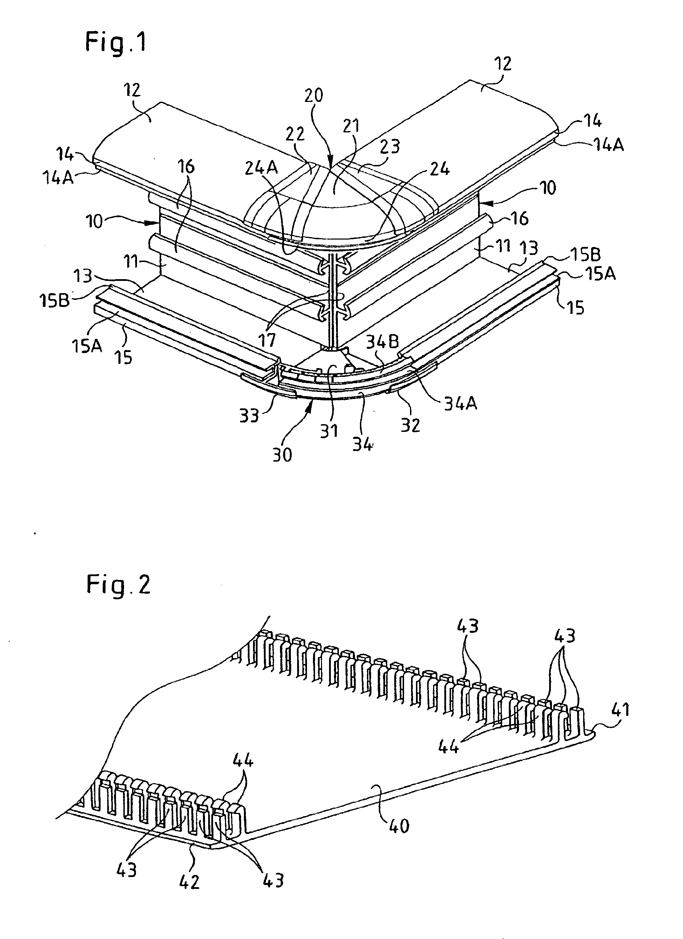

Sur la figure 1, on a représenté un accessoire d'angle utilisé pour établir la liaison entre deux tronçons de goulotte coupés et posés bout à bout pour former ici un angle extérieur.

Les deux tronçons de goulotte sont identiques et comprennent chacun, pour l'essentiel, un socle 10 présentant ici une section en U, pourvu de deux ailes latérales 12, 13 s'élevant perpendiculairement au fond dudit socle et dont les retours 14, 15, dirigés l'un vers l'autre, comportent des moyens de montage d'un tronçon de couvercle 40 (voir figure 2) de fermeture dudit socle 10.

Les retours 14, 15 s'étendent en équerre par rapport aux ailes latérales 12, 13.

Bien entendu, le socle peut présenter une toute autre section, par exemple une section en V, avec des ailes latérales divergentes portant en tête des retours dirigés l'un vers l'autre.

Les socles 10 sont préférentiellement réalisés par moulage d'une matière plastique.

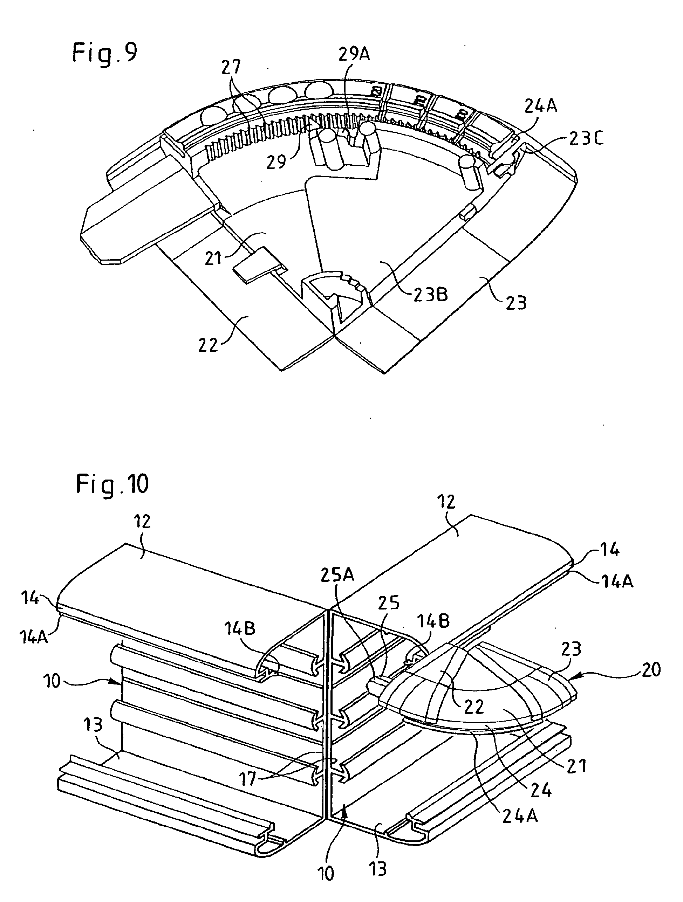

Ici, les moyens de montage du tronçon de couvercle 40 comprennent, pour chaque retour 14, 15, des moyens d'engagement constitués par une rainure 14A, 15A et, à l'extérieur de chaque rainure 14A, 15A à proximité de son fond, un bourrelet d'encliquetage 14B, 15B (voir figures 1 et 10), chaque bourrelet d'encliquetage 14B, 15B courant le long de chaque rainure 14A, 15A.

En correspondance, chaque tronçon de couvercle 40 comporte, à proximité de chacun de ses bords d'extrémité longitudinaux 41, 42, une série de languettes d'engagement 43. Chaque série de languettes d'engagement 43 s'étend le long de chaque bord d'extrémité longitudinal 41, 42 et chaque languette d'engagement 43 s'étendant, elle, perpendiculairement au plan dudit tronçon de couvercle 40.

Chaque série de languettes d'engagement 43 est destinée à s'engager dans chaque rainure 14A, 15A formée à l'extrémité de chaque retour 14, 15 de chaque aile latérale 12, 13 de chacun des socles 10.

En outre, le tronçon de couvercle 40 de fermeture comporte, du côté intérieur de chaque série de languettes d'engagement 43, et à proximité de celle-ci, une série de languettes d'encliquetage 44. Chaque série de languettes d'encliquetage 44 s'étend parallèlement à chaque série de languettes d'engagement 43, et chaque languette d'encliquetage 44 s'étend perpendiculairement au plan du tronçon de couvercle 40.

Chaque languette d'encliquetage 44 comporte, à son extrémité libre, une dent d'encliquetage.

Chaque série de languettes d'encliquetage 44 est destinée à s'accrocher sur chaque bourrelet d'encliquetage 14B, 15B correspondant de chaque aile latérale 12, 13 d'un socle 10.

Le tronçon de couvercle 40 ainsi agencé, et tel que représenté sur la figure 2, présente une certaine flexibilité pour pouvoir être adapté à une configuration de rainure et de bourrelet d'encliquetage présentant un trajet courbe selon un rayon de courbure déterminé, tel que cela sera explicité ultérieurement.

Ce tronçon de couvercle est également réalisé avantageusement en matière plastique.

Avantageusement, le tronçon de couvercle 40 est obtenu à partir d'un tronçon de couvercle classique qui comprend, à proximité de chaque bord d'extrémité longitudinal, une languette longitudinale d'engagement et une languette longitudinale d'encliquetage continues. Chaque languette longitudinale d'engagement et d'encliquetage continues du tronçon de couvercle classique est découpée en une série de languettes d'engagement et en une série de languettes d'encliquetage pour procurer audit tronçon de couvercle 40 une grande souplesse sans dégrader sa résistance mécanique.

L'accessoire d'angle représenté sur la figure 1 comprend deux joues 20, 30 destinées chacune à établir une continuité de paroi entre deux ailes latérales 12 desdits socles 10 aboutés à l'onglet par leur bord d'extrémité 17.

Chaque joue 20, 30 porte un bandeau 24, 34 assurant une continuité de paroi entre les retours 14, 15 des ailes latérales 12, 13 desdits socles 10.

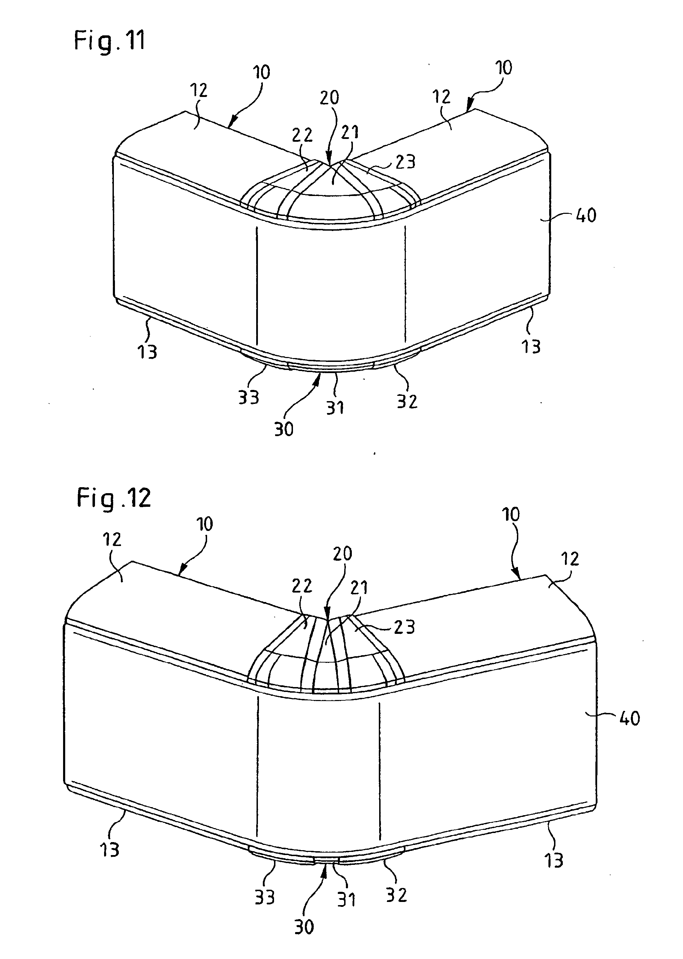

Le bandeau 24, 34 de chaque joue 20, 30 comporte des moyens de montage d'un tronçon de couvercle qui s'étendent selon un arc de cercle d'un rayon de courbure donné, de sorte que ledit accessoire d'angle autorise le montage, sur lesdites joues 20, 30, du tronçon de couvercle 40 adapté à fermer lesdits socles 10 pour permettre la fermeture de l'angle formé entre lesdits socles 10 et d'une partie de ces derniers par un seul tronçon de couvercle 40 sans interruption ni arête ou pliure dans ledit angle (voir figures 11, 12 et 14).

Ici, comme le montrent les différentes figures, avantageusement, lesdits moyens de montage de chaque tronçon de couvercle prévus sur les bandeaux 24, 34 des joues 20, 30 sont sensiblement identiques aux moyens de montage d'un tronçon de couvercle 40 prévus sur lesdits retours 14, 15 des ailes latérales 12, 13 des socles 10.

Plus particulièrement, chaque bandeau 24, 34 de chaque joue 20, 30 comporte des moyens d'engagement 24A, 34A du tronçon de couvercle 40. Ces moyens d'engagement comprennent, pour chaque joue 20, 30, une rainure 24A, 34A qui assure une continuité de rainure entre les rainures 14A, 15A prévues sur les retours 14, 15 des ailes latérales 12, 13 desdits socles 10.

En outre, chaque bandeau 24, 34 de chaque joue 20, 30 comprend des moyens d'encliquetage 24B, 34B dudit tronçon de couvercle 40.

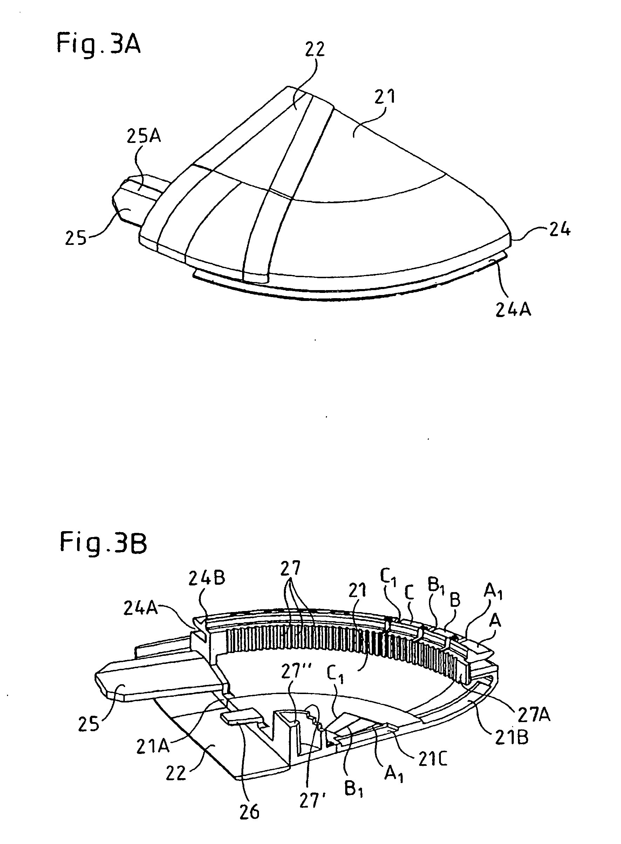

Ces moyens d'encliquetage comprennent, pour chaque joue 20, 30, un bourrelet d'encliquetage 24B (voir figure 3B), 34B qui assure une continuité de bourrelet d'encliquetage entre les bourrelets d'encliquetage 14B (voir figure 10), 15B prévus sur les retours 14, 15 des ailes latérales 12, 13 des socles 10 aboutés.

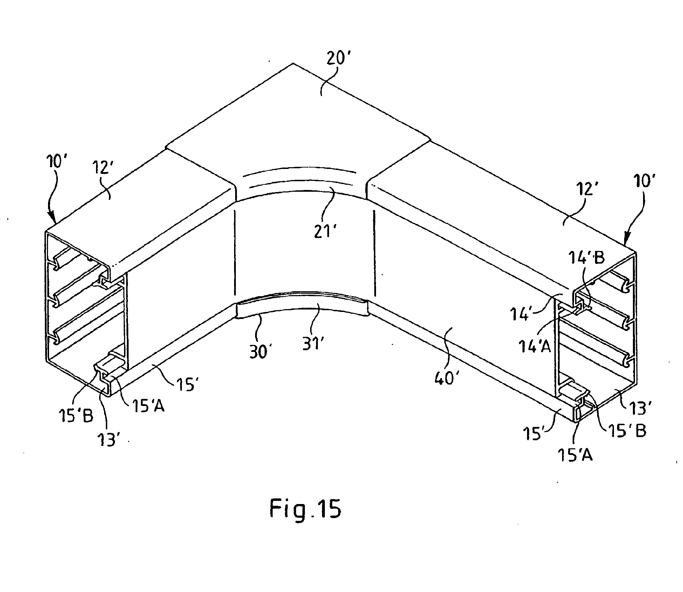

Les moyens d'engagement 24A, 34A et les moyens d'encliquetage 24B, 34B s'étendent selon un arc de cercle dont le rayon de courbure est compris, d'une part, entre 35 et 80 mm lorsque lesdites joues 20, 30 permettent la formation d'un angle extérieur entre les socles 10 des tronçons de goulotte (voir figures 1, 10, 11, 12, 13 et 14), et, d'autre part, entre 35 et 40 mm lorsque lesdites joues 20', 30' permettent la formation d'un angle intérieur entre les socles 10' de tronçons de goulotte( voir figure 15).

Ainsi, les séries de languettes d'engagement 43 portées par le tronçon de couvercle 40 représenté sur la figure 2 sont aptes à s'engager dans les rainures 14A, 15A formées à l'extrémité des retours 14, 15 des ailes latérales 12, 13 des socles 10 aboutés et, également, dans les rainures 24A, 34A formées dans les bandeaux 24, 34 desdites joues 20, 30 de l'accessoire d'angle rapporté entre lesdits socles 10.

De la même manière, les séries de languettes d'encliquetage 44 portées par le tronçon de couvercle 40 sont aptes à s'encliqueter sur les bourrelets d'encliquetage 14B, 15B prévus sur les retours 14, 15 des socles 10 aboutés et, également, sur les bourrelets d'encliquetage 24B, 34B prévus sur les bandeaux 24, 34 des joues 20, 30 de l'accessoire d'angle rapporté entre lesdits socles, pour qu'un même tronçon de couvercle 40 ferme l'angle formé entre les socles 10 et une partie de ces socles 10, comme cela est représenté notamment sur les figures 11, 12 et 14.

Bien entendu, selon une variante non représentée de l'accessoire d'angle selon l'invention, on peut prévoir que les bandeaux des joues comprennent comme moyens de montage du tronçon de couvercle seulement les moyens d'engagement précités, ou seulement les moyens d'encliquetage précités.

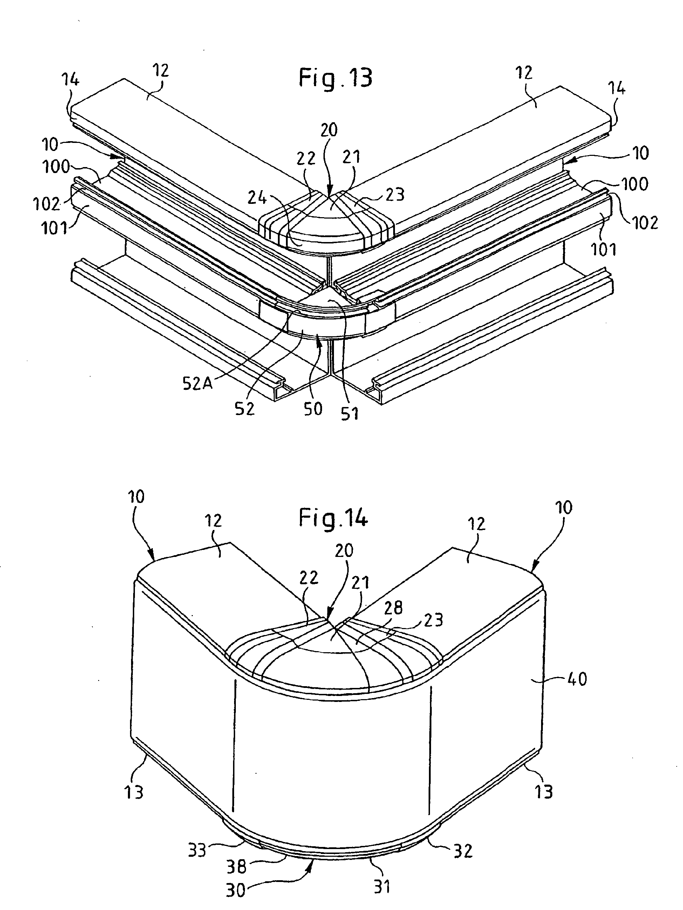

Comme le montre plus particulièrement la figure 13, selon une variante de l'accessoire d'angle représenté sur la figure 1, celui-ci comprend en outre une autre joue 50 destinée à établir une continuité de paroi entre deux cloisons de fractionnement 100 rapportées sur les fonds des socles 10 aboutés.

A cet effet, comme le montre plus particulièrement la figure 1, chaque fond 11 de chaque socle 10 comporte des nervures longitudinales 16 permettant le montage par encliquetage d'une cloison de fractionnement 100 du type de celle représentée sur la figure 13.

Cette autre joue 50 porte également un bandeau 52 assurant une continuité de paroi entre les retours 101 desdites cloisons de fractionnement 100, retours dans lesquels sont montés des tronçons de couvercle de fermeture (non représentés) des différents compartiments desdits socles 10.

Comme pour les joues 20, 30 de l'accessoire d'angle, le bandeau 52 de l'autre joue 50 comprend des moyens de montage des tronçons de couvercle, qui s'étendent selon un rayon de courbure donné qui varie entre les valeurs précédemment décrites, de sorte que ledit accessoire d'angle autorise le montage, sur lesdites joues 20, 50 et 30, des tronçons de couvercles adaptés à fermer les compartiments des socles 10 pour permettre la fermeture de l'angle formé entre lesdits socles 10 et d'une partie de chaque couple de compartiments aboutés desdits socles 10 par un seul tronçon de couvercle sans interruption ni arête ou pliure dans ledit angle.

Avantageusement, les joues 20, 30 et 50 permettent de prolonger les compartiments desdits socles 10 dans l'angle formé entre ceux-ci.

En outre, grâce à l'accessoire d'angle selon l'invention représenté sur la figure 13, un utilisateur peut, après avoir fermé les socles 10 aboutés, ouvrir un des compartiments pour accéder à celui-ci sans ouvrir l'autre de ceux-ci, puisque chaque compartiment est fermé individuellement.

L'autre joue 50 comporte une platine 51 assurant la continuité de paroi entre les cloisons de fractionnement 100 portées par les fonds des socles 10.

Ici aussi, les moyens de montage des tronçons de couvercle prévus sur le bandeau 52 de l'autre joue 50 sont identiques à ceux prévus sur les retours 101 des cloisons de fractionnement 100. Ils comprennent une rainure d'engagement 52A assurant une continuité de rainure entre les rainures 102 prévues à l'extrémité des retours 101 des cloisons de fractionnement 100.

On peut prévoir également que les moyens de montage prévus sur le bandeau 52 de l'autre joue 50 comportent également un bourrelet d'encliquetage ici non représenté, pour permettre l'engagement et l'encliquetage du tronçon de couvercle de fermeture considéré.

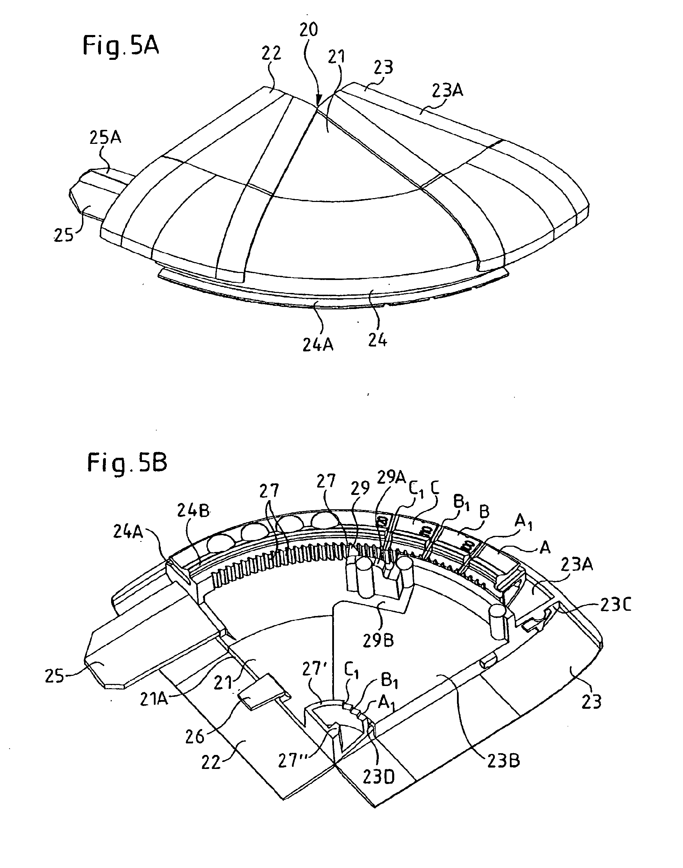

Comme le montrent plus particulièrement les figures 3A à 5B, chaque joue 20, 30, 50 de l'accessoire d'angle représenté sur la figure 1 et de l'accessoire d'angle représenté sur la figure 13, et en particulier la joue 20 représentée sur la figure 5A, comporte au moins deux éléments, à savoir un élément de base 21, 22 comportant une partie d'extrémité 22 destinée à s'engager sur une aile latérale 12 d'un desdits socles 10 de façon à couvrir le bord coupé de cette dernière et une partie centrale 21 assurant la continuité de paroi entre les deux ailes latérales 12 des socles 10, et un élément d'extrémité 23 rapporté sur la partie centrale 21 dudit élément de base et destiné à s'engager sur une aile latérale 12 de l'autre desdits socles 10 de façon à couvrir le bord coupé de cette dernière.

Bien entendu, lorsqu'il s'agit de l'autre joue 50, la partie d'extrémité de son élément de base est apte à s'engager sur une cloison de fractionnement d'un desdits socles, et son élément d'extrémité est destiné à s'engager sur une cloison de fractionnement de l'autre desdits socles.

La partie centrale 21 de l'élément de base forme un secteur angulaire, la partie d'extrémité 22 de l'élément de base forme un autre secteur angulaire et l'élément d'extrémité 23 forme également un secteur angulaire identique à celui formé par la partie d'extrémité 22 de l'élément de base.

L'élément d'extrémité 23 et l'élément de base 21, 22 sont montés à pivotement l'un sur l'autre de sorte qu'ils sont aptes à être positionnés selon différentes positions angulaires relatives, pour que la joue 20 considérée s'adapte à l'angle formé entre les socles 10 des tronçons de goulotte.

Selon l'exemple représenté sur la figure 5A, l'élément de base 21, 22 et l'élément d'extrémité 23 sont aptes à prendre différentes positions angulaires relatives pour s'adapter à un angle formé entre les socles 10 compris entre environ 90 et 120 degrés. La joue 20 représentée sur la figure 5A permet, dans le cas typique, de s'adapter à un angle extérieur de 90 degrés formé entre les socles 10 aboutés.

Plus particulièrement, l'élément d'extrémité 23 est rapporté de manière pivotante sur la partie centrale 21 de l'élément de base 21, 22, cette partie centrale 21 comportant ledit bandeau 24 de ladite joue 20.

Aux fins du montage à pivotement de l'élément d'extrémité 23 sur l'élément de base 21, 22, il est prévu, sur la face intérieure de la partie centrale 21 de ce dernier, à proximité de son sommet, une première portion de surface cylindrique 27' s'étendant sur le secteur angulaire formé par la partie centrale 21 et, du côté intérieur de l'élément d'extrémité 23, une deuxième portion de surface cylindrique complémentaire 23D destinée à coulisser sur la première portion de surface cylindrique 27' (voir figure 5B).

En outre, comme le montrent plus particulièrement les figures 3B, 4B et 5B, il est prévu, sur l'élément de base 21, 22, d'une part, et sur l'élément d'extrémité 23, d'autre part, des moyens de blocage débrayables coopérant entre eux pour bloquer en position angulaire, de manière débrayable, l'élément d'extrémité 23 et l'élément de base 21, 22 l'un par rapport à l'autre.

Ces moyens de blocage débrayables comprennent, sur l'élément de base 21, 22, une série de crans 27 pratiqués au dos de la rainure 24A prévue sur le bandeau 24 de la partie centrale 21 de cet élément de base et, sur l'élément d'extrémité 23, une dent 29 destinée à venir en appui sur un desdits crans 27. La dent 29 est montée pivotante sur l'élément d'extrémité 23 pour pouvoir être libérée par pivotement de son appui sur un desdits crans 27.

Ce montage à pivotement de la dent 29 est réalisé ici par l'intermédiaire d'une languette flexible 29A, à laquelle est rattachée la dent 29, qui est apte à se débattre par flexion dans une fenêtre 29B pratiquée dans un flasque intérieur 23B de l'élément d'extrémité 23.

Ainsi, pour débrayer lesdits moyens de blocage, il suffit à l'utilisateur d'appuyer sur la languette flexible 29A pour la faire pivoter à l'intérieur de la fenêtre 29B afin de dégager la dent 29 du cran 27 avec lequel elle coopère.

Bien entendu, on pourrait prévoir, selon une variante non représentée, que la série de crans soit formée sur l'élément d'extrémité 23 et que la dent soit prévue sur l'élément de base 21, 22.

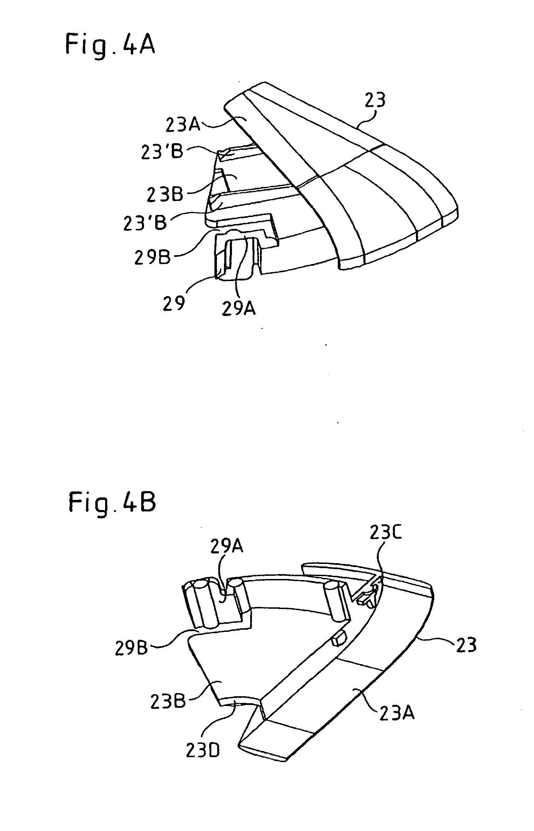

En outre, comme le montrent plus particulièrement les figures 4A, 4B et 5B, l'élément d'extrémité 23 comporte deux flasques, à savoir un flasque extérieur 23A destiné à recouvrir par l'extérieur le bord coupé de l'aile latérale 12 correspondante du socle 10 et un flasque intérieur 23B relié au flasque extérieur 23A par un décrochement 23C, de sorte que les deux flasques intérieur et extérieur 23B 23A se positionnent parallèlement l'un à l'autre en laissant entre eux un intervalle pour prendre en sandwich une partie de l'élément de base 21, 22 et, en particulier, une partie d'extrémité de la partie centrale 21 de l'élément de base 21, 22.

Lorsqu'il s'agit de l'autre joue 50, le flasque extérieur de son élément d'extrémité est destiné à recouvrir le bord coupé de la cloison de fractionnement 100 correspondante dudit socle 10.

Le flasque extérieur 23A de l'élément d'extrémité 23 présente un aspect externe identique à l'aspect externe de la partie d'extrémité 22 de l'élément de base (voir figure 5A) de sorte qu'une fois assemblés l'un avec l'autre les éléments de base et d'extrémité forment un ensemble homogène constituant la joue 20 considérée.

En outre, le flasque intérieur 23B de l'élément d'extrémité 23 porte, sur une de ses faces tournée vers l'élément de base 21, 22, des nervures d'appui 23'B sur ce dernier. Grâce à ces nervures d'appui 23'B, l'élément de base 21, 22 est mieux pincé entre les deux flasques intérieur et extérieur 23B, 23A de l'élément d'extrémité 23.

Comme le montrent plus particulièrement les figures 3B et 5B, la partie centrale 21 de l'élément de base 21, 22 comprend, à l'opposé de la partie d'extrémité 22, au moins une partie sécable. Ici, elle comprend une pluralité de parties sécables A, B, C délimitées par des lignes d'affaiblissement A1, B1, C1. Chaque partie sécable A, B, C constitue un secteur angulaire.

L'élément d'extrémité 23, et en particulier son flasque extérieur 23A, permet de recouvrir la coupe éventuellement pratiquée dans la partie centrale 21 de l'élément de base 21, 22, selon une ligne d'affaiblissement A1, B1 ou C1, pour parfaire l'esthétique de l'ensemble.

En détachant une des parties sécables A, B, C de la partie centrale 21 de l'élément de base 21, 22, l'utilisateur peut adapter la joue 20 constituée, selon l'exemple représenté, par l'élément de base 21, 22 et par l'élément d'extrémité 23, à différents angles formés entre les socles 10 des tronçons de goulotte.

Selon l'exemple représenté, en découpant la partie sécable A de l'élément de base 21, 22, la joue 20 peut être adaptée, par pivotement des deux éléments de base et d'extrémité l'un par rapport à l'autre, à un angle extérieur d'environ 100 degrés. En découpant les parties A et B de l'élément de base 21, 22, la joue 20 peut en outre être adaptée, par pivotement des deux éléments de base et d'extrémité l'un par rapport à l'autre, à un angle d'environ 110 degrés.

En découpant les parties A, B, C, la joue 20 peut être adaptée à un angle extérieur d'environ 120 degrés.

Tel que représenté sur la figure 5B, la joue 20 peut être adaptée, en faisant pivoter l'élément d'extrémité 23 sur l'élément de base 21, 22, à un angle extérieur d'environ 90 degrés.

Grâce au recouvrement de la partie d'extrémité 22 et de l'élément d'extrémité 23, chaque angle théorique formé par chaque joue bénéficie d'une tolérance de plus ou moins 5 degrés.

L'élément de base 21, 22 comprend, du côté de sa partie d'extrémité 22, une première languette 25 qui s'étend, à partir de la jonction 21A prévue entre la partie d'extrémité 22 et la partie centrale 21, en regard de la face interne de la partie d'extrémité 22 et au-delà de cette dernière.

Cette première languette 25 permet de rattacher la partie d'extrémité 22 de l'élément de base 21, 22 à l'aile latérale 12 correspondante du socle 10 considéré en prenant en sandwich une partie de cette aile latérale 12 entre ladite première languette 25 et la partie d'extrémité 22 dudit élément de base 21, 22.

En outre, l'élément de base comporte également, du côté de sa partie d'extrémité 22, à la jonction 21A entre cette partie d'extrémité 22 et la partie centrale 21, une deuxième languette 26 s'étendant en regard de la face interne de ladite partie d'extrémité 22 de façon à pouvoir prendre en sandwich une partie de l'aile latérale 12 du socle considéré entre lesdites première et deuxième languettes 25 et 26 et ladite partie d'extrémité 22 de l'élément de base.

Bien entendu, lorsqu'il s'agit de l'autre joue 50, c'est une partie de la cloison de fractionnement 100 qui est prise en sandwich entre lesdites première et deuxième languettes et ladite partie d'extrémité de l'élément de base.

Pour renforcer le maintien de l'élément de base 21, 22 sur l'aile latérale 12 ou sur la cloison de fractionnement 100 sur laquelle il est rapporté, la première languette 25 comporte une nervure d'appui 25A contre la face intérieure de l'aile latérale 12 ou de la cloison de fractionnement 100 concernée.

On remarquera que la deuxième languette 26 est plus courte que la première languette 25 et, de ce fait, cette deuxième languette 26 ne dépasse pas de la partie d'extrémité 22 de l'élément de base.

La mise en place de chaque joue 20 représentée sur les figures 5A et 5B sur les socles 10 de tronçons de goulotte aboutés pour former un angle extérieur, tel que représenté sur la figure 10, est réalisée simplement de la manière suivante.

Comme le montre la figure 9, avant de rapporter la joue 20 sur une des ailes latérales 12 d'un desdits socles 10, l'utilisateur fait pivoter l'élément d'extrémité 23 sur l'élément de base 21, 22 de cette joue 20 de façon à positionner le décrochement 23C de cet élément d'extrémité 23 contre l'extrémité de la rainure 24A prévue sur le bandeau 24 de la joue 20. Puis, l'utilisateur engage la partie d'extrémité 22 de l'élément de base 21, 22 sur ladite aile latérale 12 d'un desdits socles 10 en prenant la partie d'extrémité de cette aile latérale 12 en sandwich entre les languettes 25 et 26 portées par cette partie d'extrémité 22 et la face intérieure de cette dernière (voir figure 10).

Il fait pivoter l'élément d'extrémité 23 sur l'élément de base 21, 22 de ladite joue 20, de façon à le positionner selon une position angulaire relative par rapport à celui-ci pour que l'élément d'extrémité 23 recouvre correctement le bord coupé de l'autre aile latérale 12 de l'autre desdits socles 10 afin d'établir, entre les deux ailes latérales 12, une continuité étanche de paroi.

Enfin, l'utilisateur ferme les deux socles 10 et l'angle formé entre ceux-ci par un même tronçon de couvercle 40 qu'il monte par encliquetage sur les retours 14, 15 des ailes latérales 12, 13 desdits socles 10 et sur les bandeaux des joues 20, 30 de l'accessoire d'angle.

Le résultat final obtenu est représenté plus particulièrement sur la figure 12, qui montre deux socles 10 aboutés comprenant les joues 20, 30 de l'accessoire d'angle selon l'invention et fermés par un même tronçon de couvercle 40.

Lorsque l'angle extérieur formé entre les socles 10 des tronçons de goulotte est supérieur à 90 degrés, comme c'est le cas de l'angle représenté sur la figure 12, l'utilisateur peut adapter chaque joue 20, 30 de l'accessoire d'angle à ce nouvel angle extérieur en découpant une ou plusieurs partie(s) sécable(s) de l'élément de base 21, 22 et en faisant pivoter l'élément d'extrémité 23 pour le rapprocher de la partie d'extrémité 22 dudit l'élément de base 21, 22.

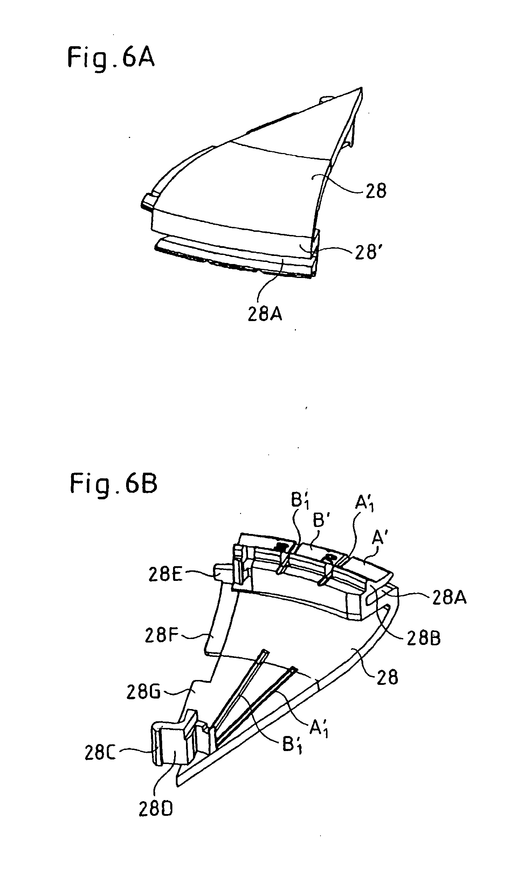

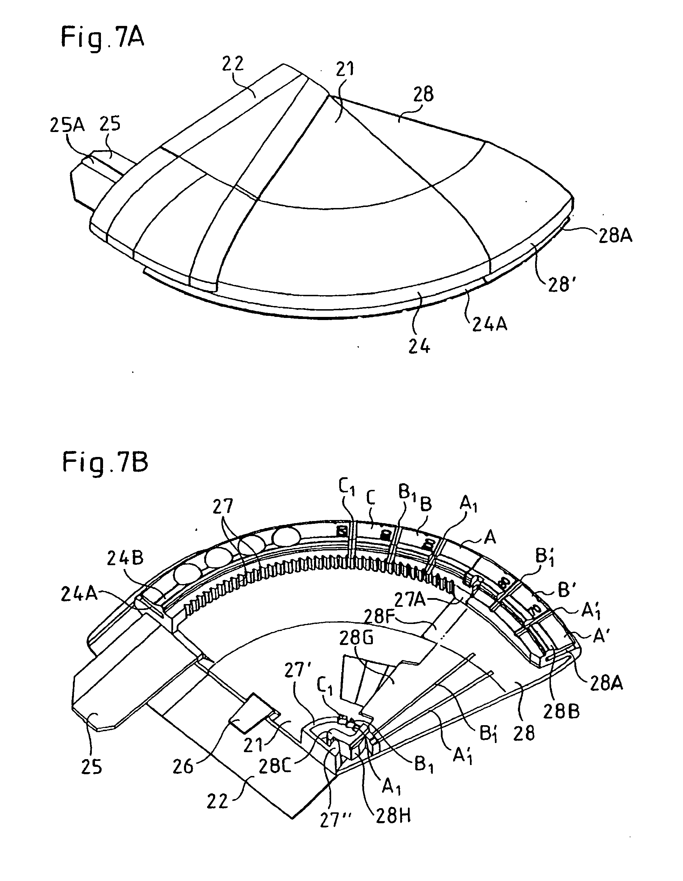

Comme le montrent les figures 6A, 6B, 7A et 7B, chaque joue 20, 30, 50, ici plus particulièrement la joue 20, peut comprendre au moins un élément supplémentaire 28 à rapporter de manière fixe sur l'élément de base 21, 22 à l'opposé de sa partie d'extrémité 22 de manière à former un élément unique sur lequel est monté à pivotement l'élément d'extrémité 23.

Cet élément supplémentaire 28 constitue un secteur angulaire (voir figure 6A) et porte un bandeau 28' qui constitue une partie du bandeau de ladite joue 20.

Cet élément supplémentaire 28 est rapporté par emboîtement sur la partie centrale 21 de l'élément de base 21, 22 de façon à se positionner à effleurement de cette partie centrale 21 pour en constituer un prolongement angulaire (voir figure 7A).

Ainsi, lorsque l'élément supplémentaire 28 est rapporté sur la partie centrale 21 de l'élément de base 21, 22, les bandeaux 24, 28' de l'élément de base 21, 22 et de l'élément supplémentaire 28 sont aboutés l'un à l'autre pour former un bandeau unique constituant le bandeau de ladite joue 20.

Pour l'emboîtement de l'élément supplémentaire 28 sur l'élément de base 21, 22, il est prévu, du côté intérieur de la partie centrale 21 de l'élément de base 21, 22, à proximité de son bord d'extrémité, des encoches 21B, 21C dans lesquelles sont destinées à s'engager des languettes 28F, 28G prévues sur un bord d'extrémité de l'élément supplémentaire 28 (voir figure 7B).

En outre, l'élément supplémentaire 28 est fixé par accrochage sur l'élément de base 21, 22.

En vue de cet accrochage, l'élément supplémentaire 28 comporte une dent d'accrochage 28C prévue à l'extrémité d'une languette 28D qui se raccorde à proximité du sommet de cet élément supplémentaire 28 et, à l'opposé, en dessous de la rainure 28A formée dans le bandeau 28' de cet élément supplémentaire 28, une languette 28E s'étendant parallèlement à l'axe longitudinal de cette rainure 28A.

En correspondance, comme le montre en particulier la figure 7B, l'élément de base 21, 22 comporte, à son sommet, une dent d'accrochage 27" sur laquelle vient s'accrocher la dent d'accrochage 28C de l'élément supplémentaire 28 et, à l'opposé, une languette 27A comprenant à son extrémité une dent destinée à s'insérer dans un logement prévu sur l'élément supplémentaire 28 derrière la languette 28E.

Ainsi, lors de l'assemblage de l'élément supplémentaire 28 sur l'élément de base 21, 22, les languettes 28F, 28G s'emboîtent dans les encoches 21B, 21C correspondantes de l'élément de base, la dent d'accrochage 28C vient s'accrocher sur la dent d'accrochage 27" correspondante de l'élément de base 21, 22, et les languettes 28E, 27A viennent se positionner l'une contre l'autre, la dent portée à l'extrémité de la languette 27A venant s'engager par encliquetage dans le logement situé derrière la languette 28E prévue sur l'élément supplémentaire 28.

De cette manière, l'élément supplémentaire 28 est fixé de manière rigide à l'élément de base 21, 22 pour qu'ils constituent ensemble un élément unique (voir figure 7A) à l'extrémité duquel peut être monté à pivotement l'élément d'extrémité 23 décrit précédemment.

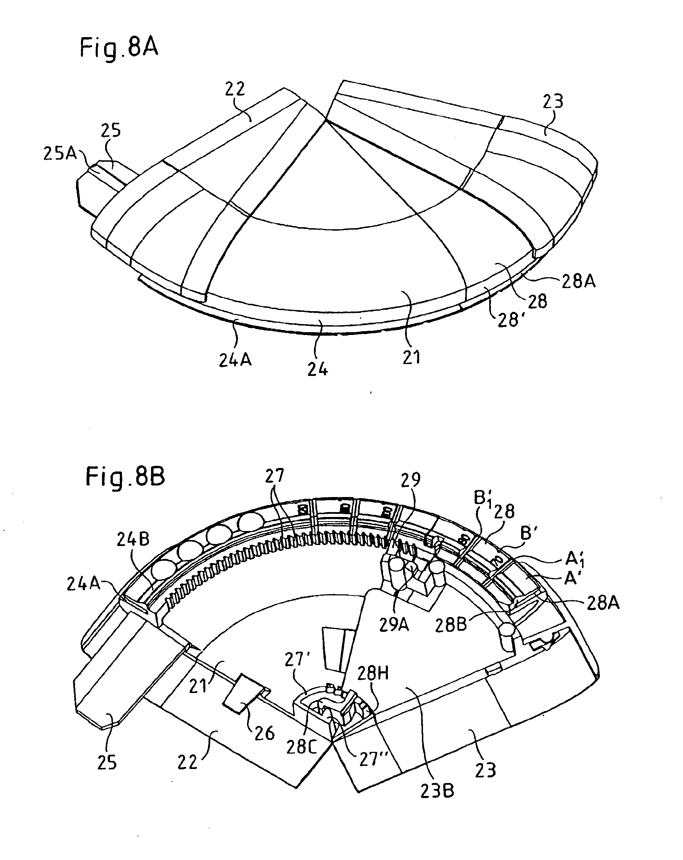

Le montage des trois éléments est représenté plus particulièrement sur les figures 8A et 8B.

Afin de pouvoir rapporter à pivotement l'élément d'extrémité 23 sur l'élément supplémentaire 28 qui constitue une prolongation de la partie centrale 21 de l'élément de base 21, 22, cet élément supplémentaire 28 comporte, à proximité de son sommet, une portion de surface cylindrique 28H qui vient prolonger la portion de surface cylindrique 27' de l'élément de base lorsque l'élément supplémentaire 28 est assemblé à l'élément de base 21, 22.

Cette portion de surface cylindrique 28H reçoit à coulissement la portion de surface cylindrique complémentaire 23D prévue sur l'élément d'extrémité 23.

Le blocage débrayable de l'élément d'extrémité 23 sur l'élément de base reste identique par la coopération de la dent 29 avec les crans 27 prévus sur l'élément de base 21, 22.

Bien entendu, l'élément supplémentaire 28 comporte, dans son bandeau 28', une rainure 28A venant prolonger la rainure 24A de l'élément de base et, également, un bourrelet d'encliquetage 28B venant prolonger le bourrelet d'encliquetage 24B de l'élément de base.

En outre, l'élément supplémentaire 28 comporte des parties sécables A', B' délimités par des lignes sécables A'1, B'1.

Le montage des trois éléments, à savoir l'élément de base 21, 22, l'élément supplémentaire 28 et l'élément d'extrémité 23, permet d'adapter chaque joue 20, 30, 50 de l'accessoire d'angle à différents angles extérieurs, formés entre des socles 10 des tronçons de goulotte, compris entre 60 et 80 degrés.

A cet effet, lorsque l'élément supplémentaire 28 est entier, c'est-à-dire qu'aucune de ses parties sécables n'a été détachée, la joue correspondante formée par l'assemblage des trois éléments précités et telle que représentée sur la figure 8A permet de raccorder les ailes latérales 12, 13 des socles 10 des tronçons de goulotte positionnés pour former entre eux un angle extérieur d'environ 60 degrés.

Pour adapter ladite joue à des socles 10 formant entre eux un angle extérieur d'environ 70 degrés, il suffit de diminuer l'élément supplémentaire 28 d'une de ses parties sécables et de faire pivoter l'élément d'extrémité pour ajuster sa position angulaire.

Enfin, pour adapter ladite joue à des socles 10 des tronçons de goulotte formant entre eux un angle extérieur d'environ 80 degrés, il suffit de détacher de l'élément supplémentaire 28 les deux parties sécables A', B' pour raccourcir angulairement celui-ci et de faire pivoter l'élément d'extrémité sur l'élément supplémentaire pour ajuster leur position angulaire relative.

La mise en place de la joue 20 constituée par les trois éléments précités assemblés entre eux est identique à la mise en place de la joue 20 constituée seulement par l'élément de base et par l'élément d'extrémité, comme cela a été décrit précédemment en référence aux figures 9 et 10.

Le résultat final obtenu après avoir mis en place, sur lesdits socles 10, les joues 20 et 30 identiques constituées chacune par les trois éléments, à savoir l'élément de base 21, 22, l'élément supplémentaire 28 et l'élément d'extrémité 23, et avoir fermé l'ensemble par un seul tronçon de couvercle 40, est représenté sur la figure 14.

Selon cette figure, les socles 10 des tronçons de goulotte aboutés forment entre eux un angle extérieur égal à environ 60 degrés.

Bien entendu, l'autre joue 50, destinée à établir une continuité de paroi entre les cloisons de fractionnement 100 rapportées sur les fonds des socles 10 des tronçons de goulotte, peut être, de la même manière que les joues 20 et 30, constituée de plusieurs éléments, pratiquement similaires à ceux décrits précédemment, et en particulier d'un élément de base et d'un élément d'extrémité ainsi que d'un élément supplémentaire, pour que cette autre joue 50 s'adapte également à des angles différents variant entre 60 et 120 degrés formés entre les socles 10 des tronçons de goulotte.

Sur la figure 15, on a représenté une variante de l'accessoire d'angle selon l'invention permettant de raccorder des socles 10' de tronçons de goulotte formant entre eux un angle intérieur ici égal à environ 90 degrés.

Ces socles 10' comprennent chacun une section de forme en U avec des ailes latérales 12', 13' comportant chacune des retours 14', 15', dirigés l'un vers l'autre, comprenant des moyens de montage d'un tronçon de couvercle 40' identiques à ceux précédemment décrits. Ces moyens de montage comportent des moyens d'engagement 14'A et 15'A constitués par une rainure et des moyens d'encliquetage 14'B et 15'B constitués par un bourrelet d'encliquetage courant sous la rainure 14'A, 15'A correspondante.

Ici, tel que représenté sur la figure 15, l'accessoire d'angle comporte également deux joues 20', 30' destinées à établir une continuité de paroi entre les ailes latérales 12', 13' des socles 10' aboutés.

Chaque joue 20', 30' présente un profil ici en angle droit et comporte, à l'opposé de l'angle droit formé par les bords d'extrémité de chaque joue, un bandeau 21', 31' destiné à établir une continuité de paroi entre les retours 14', 15' des ailes latérales 12', 13' des socles 10' aboutés.

Chaque bandeau 21', 31' de chaque joue 20', 30' de l'accessoire d'angle selon l'invention comporte également des moyens de montage du tronçon de couvercle 40', de sorte que l'angle formé entre les socles 10' et une partie de ces derniers peut être fermé par un même tronçon de couvercle 40' sans interruption ni arête ou pliure dans ledit angle, comme cela est représenté sur la figure 15.

Ici aussi, les moyens de montage prévus sur les bandeaux 21', 31' desdites joues 20', 30' sont pratiquement identiques à ceux prévus sur les retours 14', 15' des ailes latérales 12', 13' des socles 10' correspondants et ne seront pas décrits dans le détail.

Enfin, on pourra également prévoir une autre joue similaire aux joues 20', 30' pour assurer également, dans le cas de la formation d'un angle intérieur entre les deux socles 10', une continuité de paroi entre des cloisons de fractionnement rapportées sur les fonds desdits socles 10'.

Bien entendu, les différentes joues 20, 30, 50, 20', 30' de l'accessoire d'angle selon l'invention sont réalisées dans la même matière que celle des socles des tronçons de goulotte.

## Revendications

1. Goulotte comportant deux tronçons de goulotte d'orientations différentes comportant chacun un socle (10 ; 10') pourvu de deux ailes latérales (12, 13 ; 12', 13') dont des retours (14, 15 ; 14', 15'), dirigés l'un vers l'autre, comportent des moyens de montage (14A, 14B, 15A, 15B ; 14'A, 14'A, 15'A, 15'B) d'un tronçon de couvercle (40 ; 40'), la goulotte comportant un accessoire d'angle établissant une continuité entre les deux tronçons de goulotte ; ledit accessoire d'angle comprenant deux joues (20, 30 ; 20', 30') établissant chacune une continuité de paroi entre deux ailes latérales (12, 13 ; 12', 13') desdits socles (10 ; 10'), chaque joue (20, 30 ; 20', 30') portant un bandeau (24, 34 ; 21', 31') assurant une continuité de paroi entre les retours (14, 15 ; 14', 15') desdites ailes latérales (12, 13 ; 12', 13') desdits socles (10 ; 10'), **caractérisée en ce que** le bandeau (24, 34 ; 21', 31') de chaque joue (20, 30 ; 20', 30') comporte des moyens de montage du tronçon de couvercle (40 ; 40') qui s'étendent selon un arc de cercle d'un rayon de courbure donné ; et **en ce que** la goulotte comporte un tronçon de couvercle (40,40'), monté sur lesdites joues et lesdits socles, fermant une partie desdits socles (10,10') et l'angle formé entre lesdits socles (10 ; 10') sans interruption ni arête ou pliure dans ledit angle.

2. Goulotte selon la revendication 1, **caractérisée en ce qu'**elle comporte une autre joue (50) destinée à établir une continuité de paroi entre deux cloisons de fractionnement (100) rapportées sur les fonds desdits socles (10), cette autre joue (50) portant un bandeau (52) assurant une continuité de paroi entre des retours (101) desdites cloisons de fractionnement (100) dans lesquels sont montés des tronçons de couvercle de fermeture des compartiments desdits socles (10), ledit bandeau (52) comprenant des moyens de montage desdits tronçons de couvercle (40) s'étendant selon un rayon de courbure donné, les tronçons de couvercle de fermeture des compartiments desdits socles (10), montés sur lesdites joues (20,50, 30), fermant chacun une partie d'un couple de compartiments aboutés desdits socles et l'angle formé entre lesdits socles (10) sans interruption ni arête ou pliure dans ledit angle.

3. Goulotte selon l'une des revendications 1 ou 2, **caractérisée en ce que** lesdits moyens de montage de chaque tronçon de couvercle prévus sur lesdits bandeaux desdites joues sont sensiblement identiques aux moyens de montage d'un tronçon de couvercle prévus sur l'esdits retours desdites ailes latérales ou des cloisons de fractionnement desdits socles.

4. Goulotte selon l'une des revendications 1 à 3, **caractérisée en ce que** lesdits moyens de montage de chaque tronçon de couvercle prévus sur lesdits bandeaux desdites joues comprennent des moyens d'engagement dudit tronçon de couvercle.

5. Goulotte selon la revendication 4, **caractérisée en ce que** lesdits moyens d'engagement comprennent pour chaque joue (20, 30) une rainure (24A, 34A) qui assure une continuité de rainure entre les rainures (14A, 15A) prévues sur les retours (14, 15) des ailes latérales (12, 13) ou des cloisons de fractionnement (100) desdits socles (10).

6. Goulotte selon l'une des revendications 1 à 5, **caractérisée en ce que** lesdits moyens de montage de chaque tronçon de couvercle prévus sur lesdits bandeaux desdites joues comprennent des moyens d'encliquetage dudit tronçon de couvercle.

7. Goulotte selon la revendication 6, **caractérisée en ce que** lesdits moyens d'encliquetage comprennent, pour chaque joue (20, 30), un bourrelet d'encliquetage (24B, 34B) qui assure une continuité de bourrelet d'encliquetage entre les bourrelets d'encliquetage (14B, 15B) prévus sur les retours (14, 15) des ailes latérales (12, 13) ou des cloisons de fractionnement (100) desdits socles.

8. Goulotte selon l'une des revendications 1 à 7, **caractérisée en ce que** ledit rayon de courbure est compris entre environ 35 et 80 mm.

9. Goulotte selon la revendication 8, **caractérisée en ce que** ledit rayon de courbure est compris entre environ 35 et 40 mm.

10. Goulotte selon l'une des revendications 1 à 9, **caractérisée en ce que** chaque joue (20, 30) comporte au moins deux éléments, à savoir un élément de base (21, 31) comportant une partie d'extrémité (22) engagée sur une aile latérale (12) ou sur une cloison de fractionnement (100) d'un desdits socles (10) de façon à couvrir le bord coupé de cette dernière, et un élément d'extrémité (23) engagé sur une aile latérale (12) ou sur une cloison de fractionnement (100) de l'autre desdits socles de façon à couvrir le bord coupé de cette dernière, ledit élément d'extrémité (23) et ledit élément de base (21, 22) étant montés à pivotement l'un sur l'autre de sorte qu'ils sont aptes à être positionnés selon différentes positions angulaires relatives.

11. Goulotte selon la revendication 10, **caractérisée en ce qu'**il est prévu sur l'élément de base (21, 22), d'une part, et sur l'élément d'extrémité (23), d'autre part, des moyens de blocage débrayables coopérant entre eux pour bloquer en position angulaire, de manière débrayable, l'élément d'extrémité et l'élément de base l'un par rapport à l'autre.

12. Goulotte selon la revendication 11, **caractérisée en ce que** lesdits moyens de blocage débrayables comprennent, sur un desdits éléments de base et d'extrémité, une série de crans (27) et, sur l'autre desdits éléments de base et d'extrémité, une dent (29) en appui sur un desdits crans (27), ladite dent étant montée pivotante sur l'élément considéré pour pouvoir être libérée par pivotement de son appui sur ledit cran.

13. Goulotte selon l'une des revendications 10 à 12, **caractérisée en ce qu'**il est prévu, sur l'un (21, 22) desdits éléments de base et d'extrémité, une première portion de surface cylindrique (27') s'étendant sur un secteur angulaire déterminé et, sur l'autre (23) desdits éléments de base et d'extrémité, une deuxième portion de surface cylindrique complémentaire (23D) destinée à coulisser sur ladite première portion de surface cylindrique (27') pour réaliser le montage à pivotement desdits éléments de base et d'extrémité l'un sur l'autre.

14. Goulotte selon l'une des revendications 10 à 13, **caractérisée en ce que** ledit élément d'extrémité (23) comprend deux flasques, un flasque extérieur (23A) destiné à recouvrir le bord coupé de l'aile latérale (12) ou de la cloison de fractionnement (100) correspondante dudit socle (10) et un flasque intérieur (23B), entre lesquels est prise en sandwich une partie de l'élément de base (21, 22).

15. Goulotte selon la revendication 14, **caractérisée en ce que** le flasque extérieur (23A) de l'élément d'extrémité (23) présente un aspect externe identique à l'aspect externe de la partie d'extrémité (22) de l'élément de base (21, 22).

16. Goulotte selon l'une des revendications 14 ou 15, **caractérisée en ce que** le flasque intérieur (23B) de l'élément d'extrémité (23) porte, sur une de ses faces tournée vers l'élément de base (21, 22), des nervures d'appui (23'B) sur ce dernier.

17. Goulotte selon l'une des revendications 10 à 16, **caractérisée en ce que** l'élément de base (21, 22) comprend, à l'opposé de sa partie d'extrémité (22), au moins une partie sécable (A, B, C).

18. Goulotte selon la revendication 17, **caractérisée en ce que** chaque partie sécable (A, B, C) constitue un secteur angulaire.

19. Goulotte selon l'une des revendications 10 à 18, **caractérisée en ce que** l'élément de base (21, 22) comprend, du côté de sa partie d'extrémité (22), une première languette (25) s'étendant en regard de la face interne de ladite partie d'extrémité, une partie de l'aile latérale (12) ou de la cloison de fractionnement (100) correspondante du socle considéré étant destinée à être prise en sandwich entre ladite première languette (25) et ladite partie d'extrémité dudit élément de base (21, 22).

20. Goulotte selon la revendication 19, **caractérisée en ce que** ladite première languette (25) s'étend au-delà de ladite partie d'extrémité de l'élément de base (21, 22).

21. Goulotte selon l'une des revendications 19 ou 20, **caractérisée en ce que** ladite première languette (25) porte, sur sa face tournée vers ladite partie d'extrémité, une nervure d'appui (25A) contre la face intérieure de ladite aile latérale (12) ou de la cloison de fractionnement (100) concernée.

22. Goulotte selon l'une des revendications 19 à 21, **caractérisée en ce que** l'élément de base (21, 22) comprend, du côté de sa partie d'extrémité (22), une deuxième languette (26) s'étendant en regard de la face interne de ladite partie d'extrémité, une partie de l'aile latérale (12) ou de la cloison de fractionnement (100) correspondante du socle considéré étant destinée à être prise en sandwich entre lesdites première et deuxième languettes et ladite partie d'extrémité dudit élément de base.

23. Goulotte selon l'une des revendications 10 à 22, **caractérisée en ce que** ledit élément de base (21, 22) comprend une partie centrale (21) sur laquelle est rapporté de manière pivotante ledit élément d'extrémité (23), cette partie centrale comportant ledit bandeau de ladite joue.

24. Goulotte selon l'une des revendications 10 à 23, **caractérisée en ce que** chaque joue comprend au moins un élément supplémentaire (28) à rapporter de manière fixe sur l'élément de base (21, 22) à l'opposé de sa partie d'extrémité (22) de manière à former un élément unique sur lequel est monté à pivotement ledit élément d'extrémité (23).

25. Goulotte selon la revendication 24, **caractérisée en ce que** chaque élément supplémentaire (28) est rapporté par emboîtement sur l'élément de base (21, 22).

26. Goulotte selon l'une des revendications 24 ou 25, **caractérisée en ce que** chaque élément supplémentaire (28) est fixé par accrochage sur ledit élément de base (21, 22).

27. Goulotte selon l'une des revendications 24 à 26, **caractérisée en ce que** chaque élément supplémentaire (28) comprend au moins une partie sécable (A', B') s'étendant sur un secteur angulaire.

28. Goulotte selon l'une des revendications 24 à 27, **caractérisée en ce que** chaque élément supplémentaire (28) comporte une partie dudit bandeau de ladite joue.

## Patentansprüche

1. Führungskanal, umfassend zwei Führungskanalabschnitte mit unterschiedlichen Ausrichtungen, die jeweils einen Sockel (10; 10') aufweisen, der mit zwei Seitenflügeln (12, 13; 12', 13') versehen ist, deren einander zugewandte Rücksprünge (14, 15; 14', 15') Montagemittel (14A, 14B, 15A, 15B; 14'A, 14'A, 15'A, 15'B) zum Montieren eines Abdeckungsabschnitts (40; 40') aufweisen, wobei der Führungskanal ein Winkelzubehörelement aufweist, das eine Kontinuität zwischen den beiden Führungskanalabschnitten sicherstellt; wobei das Winkelzubehörelement zwei Wangenteile (20, 30; 20', 30') aufweist, die jeweils eine Kontinuität der Wand zwischen zwei Seitenflügeln (12, 13; 12', 13') der Sockel (10; 10') sicherstellen, wobei jedes Wangenteil (20, 30; 20', 30') ein Abdeckband (24, 34; 21', 31') trägt, das eine Kontinuität der Wand zwischen den Rücksprüngen (14, 15; 14', 15') der Seitenflügel (12, 13; 12', 13') der Sockel (10; 10') sicherstellt, **dadurch gekennzeichnet, dass** das Abdeckband (24, 34; 21', 31') eines jeden Wangenteils (20, 30; 20', 30') Montagemittel zum Montieren des Abdeckungsabschnitts (40; 40') aufweist, die sich entlang eines Kreisbogens mit einem gegebenen Krümmungsradius erstrecken; und dass der Führungskanal einen an die Wangenteile und an die Sockel montierten Abdeckungsabschnitt (40, 40') aufweist, der einen Teil der Sockel (10, 10') und den zwischen den Sockeln (10; 10') gebildeten Winkel unterbrechungsfrei ohne Kante bzw. Knick in dem Winkel verschließt.

2. Führungskanal nach Anspruch 1, **dadurch gekennzeichnet, dass** er ein weiteres Wangenteil (50) aufweist, das dazu bestimmt ist, eine Kontinuität der Wand zwischen zwei Trennwänden (100) sicherzustellen, die an die Böden der Sockel (10) angesetzt sind, wobei dieses weitere Wangenteil (50) ein Abdeckband (52) trägt, das eine Kontinuität der Wand zwischen Rücksprüngen (101) der Trennwände (100) sicherstellt, in welchen Abdeckungsabschnitte zum Verschließen der Innenräume der Sockel (10) montiert sind, wobei das Abdeckband (52) Montagemittel zum Montieren der Abdeckungsabschnitte (40) aufweist, die sich entlang eines gegebenen Krümmungsradius erstrecken, wobei die an die Wangenteile (20, 50, 30) montierten Abdeckungsabschnitte zum Verschließen der Innenräume der Sockel (10) jeweils einen Teil eines Paares von aneinandergefügten Innenräumen der Sockel und den zwischen den Sockeln (10) gebildeten Winkel unterbrechungsfrei ohne Kante bzw. Knick in dem Winkel verschließen.

3. Führungskanal nach einem der Ansprüche 1 oder 2, **dadurch gekennzeichnet, dass** die an den Abdeckbändern der Wangenteile vorgesehenen Montagemittel zum Montieren eines jeden Abdeckungsabschnitts im Wesentlichen identisch zu den Montagemitteln zum Montieren eines Abdeckungsabschnitts ausgeführt sind, die an den Rücksprüngen der Seitenflügel bzw. der Trennwände der Sockel vorgesehen sind.

4. Führungskanal nach einem der Ansprüche 1 bis 3, **dadurch gekennzeichnet, dass** die an den Abdeckbändern der Wangenteile vorgesehenen Montagemittel zum Montieren eines jeden Abdeckungsabschnitts Eingriffsmittel für den Abdeckungsabschnitt aufweisen.

5. Führungskanal nach Anspruch 4, **dadurch gekennzeichnet, dass** die Eingriffsmittel für jedes Wangenteil (20, 30) eine Nut (24A, 34A) aufweisen, die eine Kontinuität der Nut zwischen den Nuten (14A, 15A) sicherstellt, die an den Rücksprüngen (14, 15) der Seitenflügel (12, 13) oder der Trennwände (100) der Sockel (10) vorgesehen sind.

6. Führungskanal nach einem der Ansprüche 1 bis 5, **dadurch gekennzeichnet, dass** die an den Abdeckbändern der Wangenteile vorgesehenen Montagemittel zum Montieren eines jeden Abdeckungsabschnitts Einschnappmittel für den Abdeckungsabschnitt aufweisen.

7. Führungskanal nach Anspruch 6, **dadurch gekennzeichnet, dass** die Einschnappmittel für jedes Wangenteil (20, 30) einen Einschnappwulst (24B, 34B) aufweisen, die eine Kontinuität des Einschnappwulstes zwischen den Einschnappwülsten (14B, 15B) sicherstellen und die an den Rücksprüngen (14, 15) der Seitenflügel (12, 13) oder der Trennwände (100) der Sockel vorgesehen sind.

8. Führungskanal nach einem der Ansprüche 1 bis 7, **dadurch gekennzeichnet, dass** der Krümmungsradius zwischen etwa 35 und 80 mm beträgt.

9. Führungskanal nach Anspruch 8, **dadurch gekennzeichnet, dass** der Krümmungsradius zwischen etwa 35 und 40 mm beträgt.

10. Führungskanal nach einem der Ansprüche 1 bis 9, **dadurch gekennzeichnet, dass** jedes Wangenteil (20, 30) zumindest zwei Teilstücke aufweist, nämlich ein Basisstück (21, 31) mit einem Endbereich (22), der an einem Seitenflügel (12) oder an einer Trennwand (100) eines der Sockel (10) so eingreift, dass er die Schnittkante des bzw. der letztgenannten überdeckt, und ein Endstück (23), das an einem Seitenflügel (12) oder an einer Trennwand (100) des anderen Sockels so eingreift, dass er die Schnittkante des bzw. der letztgenannten überdeckt, wobei das Endstück (23) und das Basisstück (21, 22) zueinander verschwenkbar gelagert sind, so dass sie dazu geeignet sind, in unterschiedlichen Winkelstellungen zueinander positioniert zu werden.

11. Führungskanal nach Anspruch 10, **dadurch gekennzeichnet, dass** an dem Basisstück (21, 22) einerseits und an dem Endstück (23) andererseits lösbare Sicherungsmittel vorgesehen sind, die miteinander zusammenwirken, um das Endstück und das Basisstück in der Winkelstellung lösbar gegeneinander zu sichern.

12. Führungskanal nach Anspruch 11, **dadurch gekennzeichnet, dass** die lösbaren Sicherungsmittel an einem von dem Basisstück bzw. dem Endstück eine Reihe von Rasten (27) und an dem anderen von dem Basisstück bzw. dem Endstück einen Zacken (29) in Anlage an einer der Rasten (27) aufweisen, wobei der genannte Zacken an dem betreffenden Teilstück verschwenkbar gelagert ist, um durch Verschwenken aus seiner Anlage an der Raste freikommen zu können.

13. Führungskanal nach einem der Ansprüche 10 bis 12, **dadurch gekennzeichnet, dass** an einem (21, 22) von dem Basisstück bzw. dem Endstück ein erster Zylinderflächenabschnitt (27') vorgesehen ist, der sich über einen bestimmten Winkelsektor erstreckt, sowie an dem anderen (23) von dem Basisstück bzw. dem Endstück ein komplementär ausgeführter zweiter Zylinderflächenabschnitt (23D), der dazu bestimmt ist, an dem ersten Zylinderflächenabschnitt (27') zu gleiten, um die verschwenkbare Lagerung des Basis- und des Endstücks aneinander herzustellen.

14. Führungskanal nach einem der Ansprüche 10 bis 13, **dadurch gekennzeichnet, dass** das Endstück (23) zwei Flansche aufweist, nämlich einen äußeren Flansch (23A), der dazu bestimmt ist, die Schnittkante des Seitenflügels (12) oder der entsprechenden Trennwand (100) des Sockels abzudecken, und einen inneren Flansch (23B), zwischen denen ein Bereich des Basisstücks (21, 22) sandwichartig aufgenommen ist.

15. Führungskanal nach Anspruch 14, **dadurch gekennzeichnet, dass** der äußere Flansch (23A) des Endstücks (23) ein äußeres Erscheinungsbild aufweist, das identisch zu dem äußeren Erscheinungsbild des Endbereichs (22) des Basisstücks (21, 22) ist.

16. Führungskanal nach einem der Ansprüche 14 oder 15, **dadurch gekennzeichnet, dass** der innere Flansch (23B) des Endstücks (23) an einer seiner dem Basisstück (21, 22) zugewandten Seiten Abstützrippen (23'B) zum Abstützen an dem letztgenannten trägt.

17. Führungskanal nach einem der Ansprüche 10 bis 16, **dadurch gekennzeichnet, dass** das Basisstück (21, 22) entgegengesetzt zu seinem Endbereich (22) zumindest einen abtrennbaren Bereich (A, B, C) aufweist.

18. Führungskanal nach Anspruch 17, **dadurch gekennzeichnet, dass** jeder abtrennbare Bereich (A, B, C) einen Winkelsektor bildet.

19. Führungskanal nach einem der Ansprüche 10 bis 18, **dadurch gekennzeichnet, dass** das Basisstück (21, 22) auf der Seite seines Endbereichs (22) eine erste Zunge (25) aufweist, die sich der Innenseite des Endbereichs gegenüberliegend erstreckt, wobei ein Bereich des Seitenflügels (12) oder der entsprechenden Trennwand (100) des betreffenden Sockels dazu bestimmt ist, zwischen der ersten Zunge (25) und dem Endbereich des Basisstücks (21, 22) sandwichartig aufgenommen zu werden.

20. Führungskanal nach Anspruch 19, **dadurch gekennzeichnet, dass** die erste Zunge (25) sich über den Endbereich des Basisstücks (21, 22) hinaus erstreckt.

21. Führungskanal nach einem der Ansprüche 19 oder 20, **dadurch gekennzeichnet, dass** die erste Zunge (25) an ihrer dem Endbereich zugewandten Seite eine Abstützrippe (25A) zum Abstützen an der Innenseite des Seitenflügels (12) oder der betreffenden Trennwand (100) trägt.

22. Führungskanal nach einem der Ansprüche 19 bis 21, **dadurch gekennzeichnet, dass** das Basisstück (21, 22) auf der Seite seines Endbereichs (22) eine zweite Zunge (26) aufweist, die sich der Innenseite des Endbereichs gegenüberliegend erstreckt, wobei ein Bereich des Seitenflügels (12) oder der entsprechenden Trennwand (100) des betreffenden Sockels dazu bestimmt ist, zwischen der ersten und der zweiten Zunge und dem Endbereich des Basisstücks sandwichartig aufgenommen zu werden.

23. Führungskanal nach einem der Ansprüche 10 bis 22, **dadurch gekennzeichnet, dass** das Basisstück (21, 22) einen Mittelbereich (21) aufweist, an den das Endstück (23) verschwenkbar angesetzt ist, wobei dieser Mittelbereich das Abdeckband des Wangenteils aufweist.

24. Führungskanal nach einem der Ansprüche 10 bis 23, **dadurch gekennzeichnet, dass** jedes Wangenteil zumindest ein Zusatzteil (28) aufweist, das in fester Weise an das Basisstück (21, 22) entgegengesetzt zu seinem Endstück (22) so anzusetzen ist, dass ein einziges Teil gebildet wird, an dem das Endstück (23) verschwenkbar gelagert ist.

25. Führungskanal nach Anspruch 24, **dadurch gekennzeichnet, dass** jedes Zusatzteil (28) durch Aufstecken an das Basisstück (21, 22) angesetzt ist.

26. Führungskanal nach einem der Ansprüche 24 oder 25, **dadurch gekennzeichnet, dass** jedes Zusatzteil (28) durch Verhaken an dem Basisstück (21, 22) befestigt ist.

27. Führungskanal nach einem der Ansprüche 24 bis 26, **dadurch gekennzeichnet, dass** jedes Zusatzteil (28) zumindest einen abtrennbaren Bereich (A', B') aufweist, der sich über einen Winkelsektor erstreckt.

28. Führungskanal nach einem der Ansprüche 24 bis 27, **dadurch gekennzeichnet, dass** jedes Zusatzteil (28) einen Bereich des Abdeckbandes des Wangenteils aufweist.

## Claims

1. A trunking having two differently oriented lengths of trunking each including a base section (10, 10') having two lateral flanges (12, 13 ; 12', 13') with rims (14, 15 ; 14', 15') that are directed toward each other which include means for fitting (14A, 14B ; 15A, 15B ; 14'A, 14'B ; 15'A, 15'B) a length of cover section (40, 40'), said trunking comprising an angle accessory establishing continuity between the two lengths of trunking ; said angle accessory comprising two cheeks (20, 30 ; 20', 30') each adapted to establish a continuous wall between two lateral flanges (12', 13') of said two base sections (10, 10'), each cheek (20, 30 ; 20', 30') carrying a band (24, 34 ; 21', 31') for establishing a continuous wall between said rims (14, 15 ; 14', 15') of said two lateral flanges (12, 13 ; 12', 13') of said (20, 30 ; 20', 30') base sections (10, 10'), **characterized in that** said band (24, 34 ; 21', 31') of each cheek (20, 30 ; 20', 30') includes means for fitting the length of cover section (40 ; 40') which extend along a circular arc of given radius of curvature ; and **in that** the trunking includes a length of cover (40, 40') fitted to said cheeks and to said base sections, closing a portion of said base sections (10, 10') and the angle formed between said base sections (10, 10') with no gap or visible edge or crease in said angle.

2. The trunking claimed in claim 1, **characterized in that** it includes another cheek (50) adapted to establish a continuous wall between two divider partitions (100) attached to backs of said two base sections (10), this other cheek (50) carrying a band (52) for establishing a continuous wall between rims (101) of said divider partitions (100), in which lengths of cover section for closing compartments of said base sections (10) are mounted, said band (52) including means for fitting said lengths of cover section (40) extending along a given radius of curvature, the lengths of cover sections for closing compartments of said base sections (10), fitted to said cheeks (20, 50, 30), each closing a part of a pair of butt-jointed compartments of said base sections and the angle formed between said base sections (10) with no gap or visible edge or crease in said angle.

3. The trunking claimed in one of claims 1 or 2, **characterized in that** said means on said bands of said cheeks for fitting each length of cover section are substantially identical to said means for fitting a length of cover section on said rims of said lateral flanges or of the divider partitions of said base sections.

4. The trunking claimed in one of claims 1 to 3, **characterized in that** said means on said bands of said cheeks for fitting each length of cover section include engagement means for engaging said length of cover section.

5. The trunking claimed in claim 4, **characterized in that** said engagement means include for each cheek (20, 30) a groove (24A, 34A) adapted to establish a continuous groove between the grooves (14A, 15A) on said rims (14, 15) of said lateral flanges (12, 13) or of the divider partitions (100) of said base sections (10).

6. The trunking claimed in one of claims 1 to 5, **characterized in that** said means on said bands of said cheeks for fitting each length of cover section include clipping means for clipping said length of cover section.

7. The trunking claimed in claim 6, **characterized in that** said clipping means include for each cheek (20, 30) a clipping bead (24B, 34B) adapted to establish a continuous clipping bead between the clipping beads (14B, 15B) provided on said rims (14, 15) of said lateral flanges (12, 13) or of said divider partitions (100) of said base sections.

8. The trunking claimed in one of claims 1 to 7, **characterized in that** said radius of curvature is from approximately 35 mm to approximately 80 mm.

9. The trunking claimed in claim 8, **characterized in that** said radius of curvature is from approximately 35 mm to approximately 40 mm.

10. The trunking claimed in one of claims 1 to 9, **characterized in that** each cheek (20, 30) includes at least two members, a base member (21, 31) having an end part (22) adapted to engage over a lateral flange (12) or of a divider partition (100) of one of said base sections (10) to cover its cut edge, and an end member (23) adapted to engage over a lateral flange (12) or of a divider partition (100) of the other of said base sections to cover its cut edge, said end member (23) and said base member (21, 22) being adapted to pivot on each other so that they can be placed in different relative angular positions.

11. The trunking claimed in claim 10, **characterized in that** releasable immobilizing means on said base member (21, 22) on the one hand, and on said end member (23), on the other hand, cooperate with each other to immobilize said end member and said base member in an angular position relative to each other in a releasable manner.

12. The trunking claimed in claim 11, **characterized in that** said releasable immobilizing means include, on one of said base and end members, a series of detents (27) and, on the other of said base and end members, a tooth (29) adapted to bear on one of said detents (27), said tooth being pivoted to the member concerned so that it can be pivoted to release it from its bearing engagement with said detent.

13. The trunking claimed in one of claims 10 to 12, **characterized in that** one (21, 22) of said base and end members has a first cylindrical surface portion (27') extending over a particular angular sector and the other (23) of said base and end members has a complementary second cylindrical surface portion (23D) adapted to slide on said first cylindrical surface (27') portion to effect the pivoting of said base and end members on each other.

14. The trunking claimed in one of claims 10 to 13, **characterized in that** said end member (23) has two flanges, an external flange (23A) adapted to cover the cut edge of the corresponding lateral flange (12) or divider partition (100) of said base section (10) and an internal flange (23B), a portion of said base member (21, 22) being sandwiched between said external flange and said internal flange.

15. The trunking claimed in claim 14, **characterized in that** said external flange (23A) of said end member (23) has an external appearance identical to the external appearance of said end part (22) of said base member (21, 22).

16. The trunking claimed in one of claims 14 or 15, **characterized in that** a face of said internal flange (23B) of said end member (23) that faces toward said base member (21, 22) carries ribs (23'B) adapted to bear on said base member.

17. The trunking claimed in one of claims 10 to 16, **characterized in that** said base member (21, 22) has at least one part that can be cut off (A, B, C) opposite its end part (22).

18. The trunking claimed in claim 17, **characterized in that** each part that can be cut off (A, B, C) constitutes an angular sector.

19. The trunking claimed in one of claims 10 to 18, **characterized in that** said base member (21, 22) has, on its end part (22), a first tongue (25) extending opposite the internal face of said end part, a corresponding portion of the lateral flange (12) or divider partition (100) of the base section concerned can be sandwiched between said first tongue (25) and said end part of said base member (21, 22).

20. The trunking claimed in claim 19, **characterized in that** said first tongue (25) extends beyond said end part of said base member (21, 22).

21. The trunking claimed in one of claims 19 or 20, **characterized in that** said first tongue (25), on its face turned said end part, carries a rib (25A) adapted to bear on the internal face of said lateral flange (12) or of the divider partition (100) concerned.

22. The trunking claimed in one of claims 19 to 21, **characterized in that** said base member (21, 22) includes, on its end part side (22), a second tongue (26) extending opposite the internal face of said end part, a corresponding part of the lateral wall (12) or divider partition (100) of the base section concerned being adapted to be sandwiched between said first and second tongues and said end part of said basic member.

23. The trunking claimed in one of claims 10 to 22, **characterized in that** said base member (21, 22) has a central part (21) to which said end member (23) is pivoted, said central part including said band of said cheek.

24. The trunking claimed in one of claims 10 to 23, **characterized in that** each cheek includes at least a supplementary member (28) adapted to be fixedly attached to said base member (21, 22) opposite its end part (22) to form a single member to which said end member (23) is pivoted.

25. The trunking claimed in claim 24, **characterized in that** each additional member (28) is nested over said base member (21, 22).

26. The trunking claimed in one of claims 24 or 25, **characterized in that** each supplementary member (28) is hooked into said base member.

27. The trunking claimed in one of claims 24 to 26, **characterized in that** each supplementary member (28) includes at least a part which can be cut off (A', B') extending over an angular sector.

28. The trunking claimed in one of claims 24 to 27, **characterized in that** each supplementary member (28) includes a part of said band of said cheek.
